# EUROPÄISCHE PATENTSCHRIFT

(11) **EP 0 733 542 B1**
(45) Veröffentlichungstag und Bekanntmachung des Hinweises auf die Patenterteilung: **12.11.1997**
(21) Anmeldenummer: 95104196.1
(22) Anmeldetag: 22.03.1995
(51) Int. Cl.: B62D 29/00, B21D 26/02

(54) **Wagenkasten für Kraftfahrzeuge, insbesondere Personenkraftwagen**
Frame for motor vehicles, especially for passenger cars
Carosserie pour véhicules à moteur, en particulier pour voitures automobiles

(43) Veröffentlichungstag der Anmeldung: 25.09.1996
(73) Patentinhaber: Dr.Ing.h.c. F. Porsche Aktiengesellschaft, 70435 Stuttgart (DE); REGIE NATIONALE DES USINES RENAULT S.A., 92109 Boulogne Billancourt Cédex (FR)
(72) Erfinder: Vlahovic, Josip, 74321 Bietigheim-Bissingen (DE)

(56) Entgegenhaltungen:
- EP-A- 0 631 924
- WO-A-94/04766
- DE-A- 3 428 864
- DE-A- 4 204 825
- DE-B- 1 038 418

## Beschreibung

Die Erfindung bezieht sich auf einen Wagenkasten für Kraftfahrzeuge gemäß dem Oberbegriff des Patentanspruchs 1.

Bei einem bekannten Wagenkasten der eingangs genannten Gattung (DE 42 04 825 A1) werden die Träger und die Aufnahmen getrennt voneinander hergestellt und nachträglich durch Schweißen, Kleben, Schrauben, Nieten oder dgl. miteinander verbunden. Träger und Aufnahmen werden dabei durch Strangpreßprofilteile gebildet.

Nachteilig an dieser bekannten Anordnung ist, daß zur Herstellung und Anbindung der Aufnahmen an die Träger zeitaufwendige und kostenintensive Arbeitsgänge erforderlich sind.

Die EP-A-631 924 behandelt einen Wagenkasten für Kraftfahrzeuge, der sich aus mehreren hohlprofilartig ausgebildeten, miteinander verbundenen Trägern zusammensetzt. An einem dieser Träger sind örtlich vorstehende Ausformungen vorgesehen, die als Auflagebereich für Türscharniere dienen.

Aus der WO-A-94/04766 geht ein Fachwerk mit Hohlteilen aus Knoten und Stäben hervor, wobei ein Knoten durch mindestens eine Erhebung auf einem hohen Fachwerksteil und mindestens ein darauf aufgestecktes und befestigtes weiteres Hohlteil gebildet wird. Die Erhebungen werden dabei vorzugsweise durch Innenhochdruck-Umformen gebildet.

Aufgabe der Erfindung ist es, an einem aus Trägern und Aufnahmen bestehenden Wagenkasten solche Vorkehrungen zu treffen, daß die Ausbildung der Federbeinaufnahmen an den Trägern vereinfacht wird, so daß die Fertigungskosten gesenkt werden.

Erfindungsgemäß wird diese Aufgabe durch die Merkmale von Patentanspruch 1 gelöst. Weitere, die Erfindung in vorteilhafter Weise ausgestaltende Merkmale enthalten die Unteransprüche.

Die mit der Erfindung hauptsächlich erzielten Vorteile sind darin zu sehen, daß die Federbeinaufnahmen im Innenhochdruck-Umformverfahren einstückig integral am Träger ausgebildet werden. Diese Maßnahme erspart die Anfertigung der Aufnahmen aus Profilteilen und deren Befestigung am Träger.

Die aus Hohlprofilen gebildeten Träger können aus Stahl (nahtlos oder geschweißt) oder Leichtmetall (z.B. Aluminium oder eine Aluminiumlegierung) bestehen.

Ausführungsbeispiele der Erfindung sind in den Zeichnungen dargestellt und werden im folgenden näher beschrieben.

Es zeigt
Fig. 1 eine perspektivische Darstellung einer ersten Ausführung einer im Träger integrierten Federbeinaufnahme,
Fig. 2 einen vertikalen Schnitt durch die Federbeinaufnahme entlang der Linie II-II der Fig. 1,
Fig. 3 eine Variante der ersten Ausführung,
Fig. 4 eine perspektivische Darstellung einer zweiten Ausführung einer im Träger integrierten Feder beinaufnahme,
Fig. 5 einen vertikalen Schnitt durch die Federbeinaufnahme entlang der Linie V-V der Fig. 4,
Fig. 6 eine Variante der zweiten Ausführung,
Fig. 7 eine Ausführung gemäß Fig. 4 eines Trägers mit Mehrkammerprofil,
Fig. 8 eine Ausführung gemäß Fig. 6 mit Verstärkungseinsatz
Fig. 9 eine dritte Ausführung.

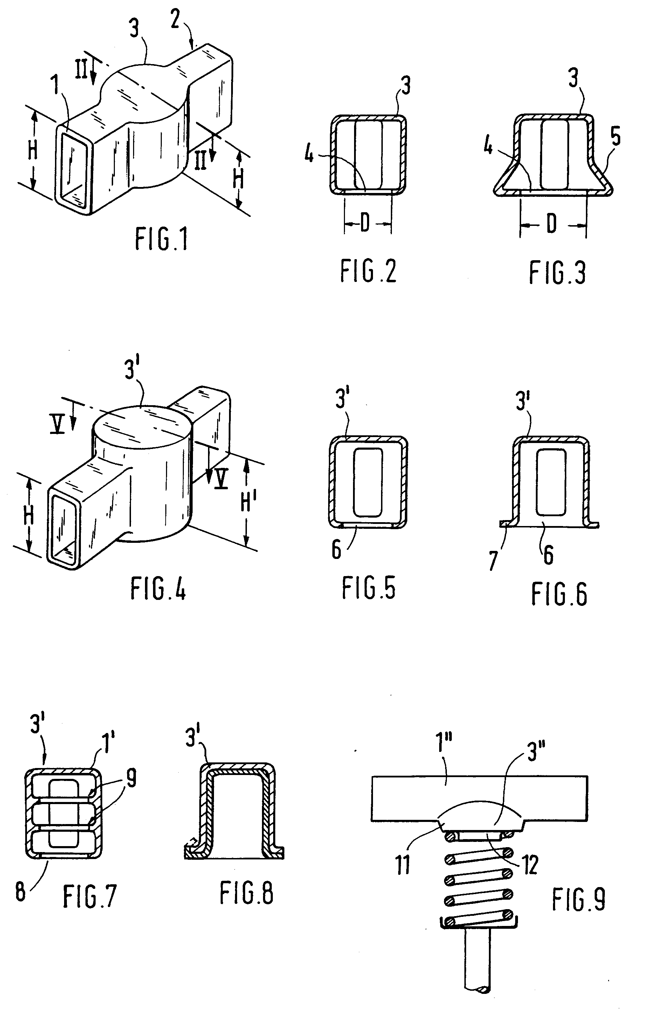

Die Fig. 1 zeigt ein erstes Ausführungsbeispiel. Ein Strangpreßprofil von rechteckigem Querschnitt 1 wird im Innenhochdruck-Umformverfahren örtlich derart umgeformt, daß integriert im Träger 2, unter Beibehaltung der Trägerhöhe H ein zylindrischer Teilbereich (Aufnahme 3) vorliegt.

Durch mechanische Bearbeitung werden entsprechende Öffnungen 4 (Fig. 2) zur Aufnahme und Befestigung eines Federbeins vorgesehen.

Entsprechend den mechanischen Anforderungen an die Aufnahme 3 kann von der zylindrischen Form abgewichen werden. Eine konische Erweiterung 5 im unteren Bereich des Zylinders, wie Figur 3 zeigt, erhöht die Festigkeit und erlaubt den Einsatz von Bauteilen mit größerem Durchmesser. Selbstverständlich sind andere Formen der Erweiterung des zylindrischen Bereichs ebenso möglich, wie z.B. runde Ausbuchtungen.

Eine Ausführungsform, bei der ein Verformen des Trägers 2 in allen Richtungen erfolgt, zeigt die Figur 4.

Ausgehend von einem Trägerprofil mit der Höhe H wird örtlich integriert im Träger 2 ein zylindrisches Teil mit der Höhe H' (H' > H) als Aufnahme 3 für Fahrzeugkomponenten geformt. Auch in dieser Ausführungsform werden mechanisch Öffnungen 6 (Fig. 5) zur Aufnahme und Befestigung des Ferderbeins angebracht. Wie oben bereits ausgeführt, ist auch bei dieser Variante eine Profilverstärkung bei Abweichung von der rein zylindrischen Form möglich. Die Fig. 6 zeigt beispielsweise die Anformung eines Flansches 7.

Entsprechend den mechanischen Anforderungen kann der Träger 2 auch ein Mehrkammerprofil besitzen. Eine Federbeinaufnahme der zweiten Ausführungsform mit Mehrkammerprofil 1' zeigt die Figur 7. Nach mechanischer Bearbeitung für die Aufnahme 8 des Federbeins bleiben Rippen 9 bestehen, die der Aufnahme als Verstärkung dienen.

Eine weitere Erhöhung der Festigkeit der Aufnahme ist durch das Einbringen von Einsätzen in die Aufnahme möglich. In die zylindrisch aufgeweiteten Aufnahmen werden Scheiben, Topfhülsen oder ähnliche Bauteile zur weiteren Verstärkung eingebracht. Die Fig. 8 veranschaulicht die Verstärkung der Federbeinaufnahme gemäß Fig. 6 durch das Einsetzen einer Topfhulse 10.

Bei den beschriebenen Ausführungen wird die Feder des Federbeins von der Aufnahme stirnseitig axial und außenseitig radial abgestützt.

Eine dritte Ausführungsform einer Federbeinaufnahme 3'', mit einer anderen Art der radialen Abstützung der Feder zeigt die Fig. 9. An einem runden Trägerprofil 1'' wird örtlich durch hydraulisches Umformen eine Federbeinaufnahme 3'' derart ausgebildet, daß sich die Feder axial an einer Profilerweiterung 11 und radial an einem sich ca. eine Federwindung in die Feder erstreckenden Zylinder 12 abstützt.

Im Rahmen der Erfindung ist es natürlich auch möglich beliebige andere Ausführungsformen der Federbeinaufnahme zu wählen. Wesentlich ist, daß die Federebeinaufnahme sowohl eine axiale als auch radiale Abstützung der Feder sicherstellt.

Das Querschnittsprofil des Trägers ist nicht auf die oben beschriebene rechteckige oder runde Form begrenzt, sondern kann jede, dem Bedarf entsprechende Form aufweisen, wie z.B. oval, trapezförmig oder dergleichen.

## Patentansprüche

1. Wagenkasten für Kraftfahrzeuge, insbesondere Personenkraftwagen, der Träger und Aufnahmen für Fahrzeugkomponenten, darunter mindestens eine Federbeinaufnahme (3, 3', 3''), aufweist, wobei die Träger durch Hohlprofile (1, 1', 1'') gebildet werden, **dadurch gekennzeichnet**, daß die Federbeinaufnahme (3, 3', 3'') einstückig mit dem angrenzenden Hohlprofil (1, 1') ausgebildet ist und durch örtliches Innenhochdruck-Umformen gebildet wird.

2. Wagenkasten nach Anspruch 1, **dadurch gekennzeichnet**, daß die Hohlprofile (1, 1') als Mehrkammerprofile ausgebildet sind.

3. Wagenkasten nach Anspruch 1, **dadurch gekennzeichnet**, daß die Hohlprofile (1, 1') rechteckigen Querschnitt aufweisen.

4. Wagenkasten nach den Ansprüchen 1 bis 3, **dadurch gekennzeichnet**, daß die Federbeinaufnahmen (3, 3') eine zylindrische Form aufweisen, wobei die Zylinderhöhe (H) gleich der Trägerhöhe (H) ist.

5. Wagenkasten nach den Ansprüchen 1 bis 3, **dadurch gekennzeichnet**, daß die Federbeinaufnahmen (3, 3') eine zylindrische Form aufweisen, wobei die Zylinderhöhe (H') die Trägerhöhe (H) übersteigt.

6. Wagenkasten nach den vorhergehenden Ansprüchen, **dadurch gekennzeichnet**, daß in die Federbeinaufnahmen (3, 3') durch mechanische Bearbeitung Öffnungen (4, 6, 8) für die aufzunehmenden Bauteile angebracht werden.

7. Wagenkasten nach den vorhergehenden Ansprüchen, **dadurch gekennzeichnet**, daß in die Federbeinaufnahmen (3, 3') Scheiben, Topfhülsen (10) oder ähnliche Körper zu deren Verstärkung eingeschoben werden.

8. Wagenkasten nach einem der vorhergehenden Ansprüche, **dadurch gekennzeichnet**, daß die Hohlprofile (1, 1') Strangpreßprofile sind, die aus einer Leichtmetallegierung gefertigt sind.

## Claims

1. A frame for motor vehicles, in particular passenger cars, comprising supports and receiving means for vehicle components, including at least one telescopic-leg receiving means (3, 3', 3''), wherein the supports are formed by hollow sections (1, 1', 1''), **characterized in that** the telescopic-leg receiving means (3, 3', 3'') is constructed integrally with the adjacent hollow section (1, 1') and is formed by local internal high-pressure shaping.

2. A vehicle frame according to Claim 1, **characterized in that** the hollow sections (1, 1') are constructed as multiple-chamber sections.

3. A vehicle frame according to Claim 1, **characterized in that** the hollow sections (1, 1') have a rectangular cross-section.

4. A vehicle frame according to Claims 1 to 3, **characterized in that** the telescopic-leg receiving means (3, 3') has a cylindrical shape, wherein the cylinder height (**H**) is equal to the support height (**H**).

5. A vehicle frame according to Claims 1 to 3, **characterized in that** the telescopic-leg receiving means (3, 3') has a cylindrical shape, wherein the cylinder height (**H**) exceeds the support height (**H**).

6. A vehicle frame according to the preceding Claims, **characterized in that** openings (4, 6, 8) for the components to be received are formed in the telescopic-leg receiving means (3, 3') by machining.

7. A vehicle frame according to the preceding Claims, **characterized in that** discs, cup sleeves (10) or similar components are inserted in the telescopic-leg receiving means (3, 3') for the reinforcement thereof.

8. A vehicle frame according to one of the preceding Claims, **characterized in that** the hollow sections (1, 1') are extruded sections produced from a light-metal alloy.

## Revendications

1. Caisse de véhicule automobile, en particulier de voiture de tourisme, qui comporte des poutres et des logements pour des composants de véhicule, parmi lesquels au moins un logement de jambe de force à ressort (3, 3', 3''), les poutres étant formées par des profilés creux (1, 1', 1''), caractérisée en ce que le logement de jambe de force à ressort (3, 3', 3'') est réalisé d'une seule pièce avec le profilé creux (1, 1') adjacent et est formé par déformation locale sous haute pression intérieure.

2. Caisse de voiture selon la revendication 1, caractérisée en ce que les profilés creux (1, 1') sont des profilés à chambres multiples.

3. Caisse de voiture selon la revendication 1, caractérisée en ce que les profilés creux (1, 1') présentent une section transversale rectangulaire.

4. Caisse de voiture selon les revendications 1 à 3, caractérisée en ce que les logements de jambe de force à ressort (3, 3') présentent une forme cylindrique, la hauteur (H) du cylindre étant égale à la hauteur (H) de la poutre.

5. Caisse de voiture selon les revendications 1 à 3, caractérisée en ce que les logements de jambe de force à ressort (3, 3') présentent une forme cylindrique, la hauteur (H') du cylindre étant supérieure à la hauteur (H) de la poutre.

6. Caisse de voiture selon les revendications précédentes, caractérisée en ce que des ouvertures (4, 6, 8), pour les composants à loger, sont pratiquées par usinage mécanique dans les logements de jambe de force à ressort (3, 3').

7. Caisse de voiture selon les revendications précédentes, caractérisée en ce que dans les logements de jambe de force à ressort (3, 3') sont introduits des disques, des douilles en pot (10) ou des corps similaires pour leur renfort.

8. Caisse de voiture selon l'une des revendications précédentes, caractérisée en ce que les profilés creux (1, 1') sont des profiles extrudés, qui sont réalisés dans un alliage de métaux légers.
